(19) Europäisches Patentamt
European Patent Office
Office européen des brevets

(11) **EP 3 168 639 A1**

(12) **EUROPÄISCHE PATENTANMELDUNG**

(43) Veröffentlichungstag:
**17.05.2017 Patentblatt 2017/20**

(51) Int Cl.:
**G01S 13/72** (2006.01)   **G01S 13/93** (2006.01)
**G01S 13/52** (2006.01)   **G01S 13/58** (2006.01)
G01S 15/93 (2006.01)   G01S 15/66 (2006.01)

(21) Anmeldenummer: **16198235.0**

(22) Anmeldetag: **10.11.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **13.11.2015   DE 102015119650**

(71) Anmelder: **Valeo Schalter und Sensoren GmbH 74321 Bietigheim-Bissingen (DE)**

(72) Erfinder: **Krueger, Moritz 74321 Bietigheim-Bissingen (DE)**

(54) **VERFAHREN ZUM VALIDIEREN VON ZUMINDEST EINER ZIELDETEKTION EINES ZIELOBJEKTES, RECHENEINRICHTUNG, FAHRERASSISTENZSYSTEM SOWIE KRAFTFAHRZEUG**

(57)    Die Erfindung betrifft ein Verfahren zum Validieren von zumindest einer Zieldetektion (Z) zumindest eines Zielobjektes (O) in einem Umgebungsbereich (3) eines Kraftfahrzeugs (1), welche von einer fahrzeugseitigen Sensoreinrichtung (4) in einem ersten Messzyklus bestimmt wird, wobei bei dem Verfahren zu der zumindest einen Zieldetektion (Z) und zu Detektionen (D), welche von der Sensoreinrichtung (4) in zumindest einem zweiten Messzyklus bestimmt werden, jeweils ein Abstandswert ($R_0$, $R_1$) und ein Geschwindigkeitswert ($v_{R,0}$, $v_{R,1}$) bestimmt werden, und folgende Schritte durchgeführt werden:

a) Vorhersagen (S3) von aktuellen Abstands- und Geschwindigkeitswerten ($\hat{R}_1$, $\hat{v}_{R,1}$) der zumindest einen Zieldetektion (Z) basierend auf den Abstands- und Geschwindigkeitswerten ($R_0$, $v_{R,0}$) des ersten Messzyklus;

b) Bestimmen (S5) jeweils eines Ähnlichkeitsmaßes (A) zwischen der zumindest einen Zieldetektion (Z) des ersten Messzyklus und den Detektionen (D) des zweiten Messzyklus basierend auf den vorhergesagten Abstands- und Geschwindigkeitswerten ($\hat{R}_1$, $\hat{v}_{R,1}$) und den Abstands- und Geschwindigkeitswerten ($R_1$, $v_{R,1}$) des zweiten Messzyklus;

c) Zuordnen (S6) einer der Detektionen (D) zu der zumindest einen Zieldetektion (Z) anhand der bestimmten Ähnlichkeitsmaße (A);

d) Validieren (S7, S8) der zumindest einen Zieldetektion (Z), falls das jeweilige Ähnlichkeitsmaß (A) zwischen der Zieldetektion (Z) und der zugeordneten Detektion (D) in einem vorbestimmten Toleranzbereich (8) liegt.

Fig.1

**Beschreibung**

Die Erfindung betrifft ein Verfahren zum Validieren von zumindest einer Zieldetektion zumindest eines Zielobjektes in einem Umgebungsbereich eines Kraftfahrzeugs, welche anhand eines, von einer fahrzeugseitigen Sensoreinrichtung in einem ersten Messzyklus erfassten Echosignals bestimmt wird, wobei bei dem Verfahren zu der zumindest einen Zieldetektion und zu Detektionen, welche anhand eines, von der Sensoreinrichtung in zumindest einem zweiten Messzyklus erfassten Echosignals bestimmt werden, jeweils ein Abstandswert und ein Geschwindigkeitswert bestimmt werden. Die Erfindung betrifft außerdem eine Recheneinrichtung, ein Fahrerassistenzsystem sowie ein Kraftfahrzeug.

Vorliegend richtet sich das Interesse auf Sensoreinrichtungen für Kraftfahrzeuge, welche beispielsweise einen Radarsensor oder einen Ultraschallsensor umfassen. Diese Sensoreinrichtungen dienen dazu, Zielobjekte in einem Umgebungsbereich des Kraftfahrzeugs zu erfassen beziehungsweise zu erkennen sowie deren Abstand zu dem Kraftfahrzeug und deren Geschwindigkeit zu detektieren. Dazu arbeitet die Sensoreinrichtung üblicherweise nach dem Echolotprinzip. Das heißt, die Sensoreinrichtung sendet ein Sendesignal aus, welches an den Zielobjekten in dem Umgebungsbereich des Kraftfahrzeugs reflektiert wird. Das reflektierte Sendesignal wird dann als Echosignal wieder von der Sensoreinrichtung empfangen. Das empfangene Echosignal wird dann, beispielsweise mittels zweidimensionaler Fourier-Transformation beziehungsweise 2D FFT (FFT- fast fourier transform), in Echosignalanteile zerlegt. Dabei werden diejenigen Echosignalanteile identifiziert, welche von Reflexionen an Zielobjekten stammen. Diese Echosignalanteile repräsentieren also Zieldetektionen von Zielobjekten. Zu jeder Zieldetektion wird ein Abstandswert, welcher anhand einer Laufzeit des Echosignals ermittelt wird, und ein Geschwindigkeitswert, welcher anhand einer Dopplerverschiebung ermittelt wird, bestimmt. Die Zieldetektionen können dabei in eine Matrix, eine sogenannte Range-Doppler-Matrix, eingetragen werden, deren Spalten jeweils ein Abstandswert und deren Zeilen jeweils ein Geschwindigkeitswert zugeordnet ist.

Um eine Position eines Zielobjektes besonders genau bestimmen zu können, werden gemäß dem in der WO 2011/031358 A1 beschriebenen Verfahren von einem ersten Sensor eine erste Menge von Koordinaten betreffend eine erste mögliche Position des Zielobjektes und von einem zweiten Sensor eine zweite Menge von Koordinaten betreffend eine zweite mögliche Position des Zielobjektes erfasst. Dann wird basierend auf der ersten und zweiten Menge von den Koordinaten validiert, ob alle Koordinaten aus der ersten Menge und der zweiten Menge vom selben Zielobjekt stammen.

Dazu ist es aber zunächst erforderlich, jede Zieldetektion zu validieren. Dies bedeutet, dass überprüft werden muss, ob eine bestimmte Zieldetektion tatsächlich von einer Reflexion an einem Zielobjekt stammt oder ob es sich bei der bestimmten Zieldetektion beispielsweise um einen Rauschanteil im Echosignal handelt, welcher fälschlicherweise als Zieldetektion bestimmt wurde. Eine Zieldetektion gilt dann als validiert, wenn sie in zwei aufeinanderfolgenden Messzyklen beobachtet wurde. Anders ausgedrückt, wird eine in einem ersten Messzyklus erfasste Zieldetektion eines Zielobjektes validiert, wenn sie zusätzlich in zumindest einem auf den ersten Messzyklus folgenden zweiten Messzyklus erfasst wurde. Dazu muss eine der Detektionen aus dem aktuellen zweiten Messzyklus derjenigen Zieldetektion aus dem vorherigen ersten Messzyklus zugeordnet werden, welche vom selben Zielobjekt stammt. Problematisch hierbei ist, dass das Zielobjekt und/oder die Sensoreinrichtung selbst typischerweise zwischen zwei Messzyklen ihre Position verändern. Daher reicht es in der Regel nicht aus, zu überprüfen, ob in den Range-Doppler-Matrizen von zwei aufeinanderfolgenden Messzyklen das Zielobjekt zweimal an derselben Stelle detektiert wurde.

Es ist Aufgabe der vorliegenden Erfindung, eine Lösung bereitzustellen, mittels welcher zumindest eine von einer Sensoreinrichtung erfasste Zieldetektion eines Zielobjektes in einem Umgebungsbereich eines Kraftfahrzeugs besonders zuverlässig validiert werden können.

Diese Aufgabe wird erfindungsgemäß durch ein Verfahren, eine Recheneinrichtung, ein Fahrerassistenzsystem sowie ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Validieren von zumindest einer Zieldetektion zumindest eines Zielobjektes in einem Umgebungsbereich eines Kraftfahrzeugs, welche anhand eines von einer fahrzeugseitigen Sensoreinrichtung in einem ersten Messzyklus erfassten Echosignals bestimmt wird. Bei dem Verfahren werden zu der zumindest einen Zieldetektion und zu Detektionen, welche anhand eines von der Sensoreinrichtung in zumindest einem zweiten Messzyklus erfassten Echosignals bestimmt werden, jeweils ein Abstandswert und ein Geschwindigkeitswert bestimmt. Das Verfahren umfasst außerdem folgende Schritte:

a) Vorhersagen eines aktuellen Abstandswertes und eines aktuellen Geschwindigkeitswertes der zumindest einen Zieldetektion basierend auf dem in dem ersten Messzyklus bestimmten Abstandswert und dem in dem ersten Messzyklus bestimmten Geschwindigkeitswert;

b) Bestimmen jeweils eines Ähnlichkeitsmaßes zwischen der zumindest einen Zieldetektion des ersten Messzyklus und den Detektionen des zweiten Messzyklus basierend auf dem vorhergesagten aktuellen Abstandswert, dem vorhergesagten aktuellen Geschwindigkeitswert, den in dem zweiten Messzyklus bestimmten Abstandswerten und den in dem zweiten Messzyklus bestimmten Geschwindigkeitswerten;

c) Zuordnen einer der Detektionen des zweiten Messzyklus zu der zumindest einen Zieldetektion des ersten Messzyklus anhand der bestimmten Ähnlichkeitsmaße; und

d) Validieren der zumindest einen Zieldetektion, falls das jeweilige Ähnlichkeitsmaß zwischen der Zieldetektion und der zugeordneten Detektion in einem vorbestimmten Toleranzbereich liegt.

Mit der Sensoreinrichtung, welche am Kraftfahrzeug angeordnet sein kann, können Objekte in dem Umgebungsbereich des Kraftfahrzeugs erfasst beziehungsweise detektiert werden. Die Sensoreinrichtung kann beispielsweise einen Ultraschallsensor umfassen. Vorzugsweise umfasst die Sensoreinrichtung einen Radarsensor. Mittels der Sensoreinrichtung können Abstände zwischen der Sensoreinrichtung und den Objekten sowie Geschwindigkeiten der Objekte bestimmt werden. Dazu kann die Sensoreinrichtung ein Sendesignal, beispielsweise in Form von einer elektromagnetischen Welle, aussenden, welches an den Objekten in dem Umgebungsbereich des Kraftfahrzeugs reflektiert wird. Das reflektierte Sendesignal wird von der Sensoreinrichtung wieder als Echosignal empfangen. Das Echosignal wird, beispielsweise mittels zweidimensionaler Fourier-Transformation, in Echosignalanteile zerlegt, wobei diejenigen Echosignalanteile als Detektionen identifiziert werden, welche von Reflexionen des Sendesignals an den Objekten stammen. Zu den Detektionen werden jeweils ein Abstandswert, beispielsweise anhand einer Laufzeit des Sendesignals und des Echosignals, und ein Geschwindigkeitswert, beispielsweise anhand einer Doppler-Verschiebung des Echosignals, bestimmt. Der Abstandswert einer Detektion entspricht dem Abstand des zu dieser Detektion gehörigen Objektes zu dem Kraftfahrzeug. Ein Geschwindigkeitswert der Detektion entspricht einer Geschwindigkeit des zu dieser Detektion gehörigen Objektes. Die Detektionen können beispielsweise in eine Range-Doppler-Matrix eingetragen werden, deren Spalten beispielsweise jeweils ein Abstandswert und deren Zeilen beispielsweise jeweils ein Geschwindigkeitswert zugeordnet ist. Die Sensoreinrichtung wird hier in mehreren, zeitlich aufeinanderfolgenden, Messzyklen betrieben. Dabei wird in jedem Messzyklus jeweils ein Sendesignal ausgesendet, dieses Sendesignal an Objekten in dem Umgebungsbereich reflektiert und das reflektierte Sendesignal wieder von der Sensoreinrichtung als Echosignal empfangen.

Zunächst wird, beispielsweise von einer fahrzeugseitigen Recheneinrichtung, in dem ersten Messzyklus die zumindest eine Zieldetektion anhand des in dem ersten Messzyklus erfassten Echosignals bestimmt. Anders ausgedrückt wird zumindest ein Echosignalanteil des Echosignals identifiziert, welcher die zumindest eine Zieldetektion charakterisiert. Für diese Zieldetektion werden der Abstandswert des Zielobjektes sowie der Geschwindigkeitswert des Zielobjektes bestimmt. Um die Zieldetektion zu validieren, also um herauszufinden, ob die Zieldetektion tatsächlich von dem Zielobjekt stammt und nicht beispielsweise ein Echosignalanteil ist, welcher einen sogenannten Falschalarm auslöst, soll das Zielobjekt auch in dem zumindest einen zweiten Messzyklus erfasst werden. Dazu wird in dem zumindest einen zweiten Messzyklus, welcher zeitlich auf den ersten Messzyklus folgt, wiederum ein Sendesignal ausgesendet und ein Echosignal empfangen, welches an Objekten, insbesondere auch an dem Zielobjekt, in dem Umgebungsbereich reflektiert wurde. Anhand des Echosignals werden diejenigen Echosignalanteile als Detektionen bestimmt, welche von Reflexionen an den Objekten stammen. Anders ausgedrückt werden die Detektionen aus dem Echosignal extrahiert, welche die Objekte in dem Umgebungsbereich charakterisieren.

Da, beispielsweise durch eine Fahrt des Kraftfahrzeugs oder durch eine Bewegung des Zielobjektes, das Zielobjekt zwischen den zumindest zwei Messzyklen seine Position geändert haben kann, wird nun zunächst diejenige in dem zweiten Messzyklus erfasste Detektion bestimmt, welche der zumindest einen Zieldetektion entsprechen könnte. Dazu wird der aktuelle Abstandswert und der aktuelle Geschwindigkeitswert der zumindest einen Zieldetektion basierend auf dem Abstandswert des ersten Messzyklus und dem Geschwindigkeitswert des ersten Messzyklus bestimmt. Der aktuelle Geschwindigkeitswert und der aktuelle Abstandswert entsprechen also prognostizierten Werten der Zieldetektion in dem zumindest einen auf den ersten Messzyklus folgenden zweiten Messzyklus. Diese aktuellen, vorhergesagten Abstands- und Geschwindigkeitswerte sind also Werte, welche die Zieldetektion in dem zweiten Messzyklus aufweisen soll.

In einem nächsten Schritt wird insbesondere für jede Kombination zwischen der zumindest einen Zieldetektion und den Detektionen des zweiten Messzyklus das Ähnlichkeitsmaß bestimmt. Anders ausgedrückt bedeutet dies, dass bei n Detektionen des zweiten Messzyklus auch n Ähnlichkeitsmaße bestimmt werden. Dieses Ähnlichkeitsmaß charakterisiert einen Fehler beziehungsweise eine Abweichung der vorhergesagten Werte zu den in dem zweiten Messzyklus bestimmten Werten. Das Ähnlichkeitsmaß wird insbesondere basierend auf der Abweichung zwischen den prognostizierten Werte und der Abweichung zwischen den in dem zweiten Messzyklus bestimmten Werten bestimmt. Dazu können jeweilige Abweichungen beziehungsweise Fehler zwischen dem vorhergesagten, aktuellen Abstandswert und den in dem zweiten Messzyklus bestimmten Abstandswerten bestimmt werden und in eine erste Fehlermatrix eingetragen werden, und jeweilige Abweichungen beziehungsweise Fehler zwischen dem vorhergesagten, aktuellen Geschwindigkeitswert und den in dem zweiten Messzyklus bestimmten Geschwindigkeitswerten bestimmt werden und in eine zweite Fehlermatrix eingetragen werden. Aus diesen Fehlermatrizen kann für jede Kombination der Zieldetektion und einer Detektion aus dem zweiten Messzyklus das Ähnlichkeitsmaß bestimmt werden, wobei das Ähnlichkeitsmaß insbesondere einen Abstand in einem Abstands-Geschwindigkeits-Raum beschreibt.

Darauffolgend wird eine der Detektionen des zweiten Messzyklus der zumindest einen Zieldetektion des ersten Messzyklus anhand der bestimmten Ähnlichkeitsmaße zugeordnet. Dabei wird diejenige Detektion des zweiten Messzyklus der Zieldetektion des ersten Messzyklus zugeordnet, welche der Zieldetektion am ähnlichsten ist. Anders ausgedrückt wird also diejenige Detektion aus dem zweiten Messzyklus ausgewählt, welche den geringsten Fehler aufweist, da dies die wahrscheinlichste Zuordnung ist.

In einem letzten Schritt wird das Zielobjekt validiert. Dazu wird das Ähnlichkeitsmaß der zumindest einer Zieldetektion und der zugeordneten Detektion mit einem konstanten Schwellwert, welcher eine Grenze des Toleranzbereiches charakterisiert, verglichen. Dieser konstante Schwellwert kann auch als Radius beziehungsweise Gate des Toleranzbereiches bezeichnet werden. Falls das Ähnlichkeitsmaß kleiner als der Radius ist, also innerhalb des Toleranzbereiches liegt, wird die Zieldetektion als validiert angenommen. Die Abstandswerte und Geschwindigkeitswerte des validierten Zielobjektes können einem Fahrerassistenzsystem des Kraftfahrzeugs, beispielsweise einer Einparkhilfe, einem Totwinkel-Assistenten, einem Abstandsregeltempomaten oder einem automatischen Türöffner, bereitgestellt werden.

Aus dem Verfahren ergibt sich der Vorteil, dass sowohl die Abstandswerte als auch die Geschwindigkeitswerte zum Validieren des Zielobjektes verwendet werden. Somit kann berücksichtigt werden, dass sich das Zielobjekt zwischen zwei Detektionen bezüglich der Sensoreinrichtung bewegen kann. Durch die Prognose der Werte für den Abstand und die Geschwindigkeit kann außerdem eine besonders zuverlässige Zuordnung einer der Detektionen zu dem Zielobjekt erfolgen.

Besonders bevorzugt wird vor Schritt a) ein Schritt e) durchgeführt, bei welchem eine Mehrdeutigkeit der in den zumindest zwei Messzyklen bestimmten Geschwindigkeitswerte und/oder Abstandswerte beseitigt wird, indem für die Geschwindigkeitswerte und/oder Abstandswerte jeweils ein eindeutiger Geschwindigkeitswert und/oder Abstandswert bestimmt wird, wobei für die Schritte a) bis d) anstelle der in den zumindest zwei Messzyklen bestimmten Geschwindigkeitswerte und/oder Abstandswerte die eindeutigen Geschwindigkeitswerte und/oder Abstandswerte verwendet werden. Eine Mehrdeutigkeit von Abstandswerten und/oder Geschwindigkeitswerten tritt insbesondere bei Radarsensoren auf. In Abhängigkeit von der Wahl des jeweiligen Radarsensors kann es vorkommen, dass der Radarsensor keine eindeutige Geschwindigkeitsmessung oder keine eindeutige Abstandsmessung erlaubt. Eine Geschwindigkeitsmehrdeutigkeit kann beispielsweise bei Pulse-Doppler-Radarsensoren auftreten. Die Eindeutigkeit der Messung ist bei Radarsensoren insbesondere durch die sogenannte Pulsfolgefrequenz bestimmt, welche durch den zeitlichen Abstand zwischen zwei aufeinanderfolgenden Sendesignalimpulsen gegeben ist. Um nun fehlerhafte Werte für die Geschwindigkeit und/oder den Abstand, welche zu der zumindest einen Zieldetektion in dem ersten Messzyklus und zu den Detektionen in dem zweiten Messzyklus bestimmt wurden, und damit eine fehlerhafte Vorhersage der aktuellen Werte und eine fehlerhafte Zuordnung einer Detektion zu der Zieldetektion zu vermeiden, wird zuerst die Mehrdeutigkeit der Geschwindigkeitswerte und/oder Abstandswerte beseitigt. Dazu wird für den in dem ersten Messzyklus bestimmten Abstandswert und/oder Geschwindigkeitswert des zumindest einen Zielobjektes der eindeutige Abstandswert und/oder Geschwindigkeitswert bestimmt. Dieser eindeutige Abstandswert und/oder Geschwindigkeitswert beschreibt den tatsächlichen Abstand und/oder die tatsächliche Geschwindigkeit des Zielobjektes und der Objekte in dem Umgebungsbereich. Basierend auf dem eindeutigen Abstandswert der Zieldetektion und/oder dem eindeutigen Geschwindigkeitswert der Zieldetektion wird auch der aktuelle Abstandswert und/oder der aktuelle Geschwindigkeitswert vorhergesagt. Auch für die Detektionen aus dem zweiten Messzyklus werden jeweils ein eindeutiger Geschwindigkeitswert und/oder ein eindeutiger Abstandswert bestimmt. Basierend auf diesen eindeutigen Geschwindigkeitswerten und/oder Abstandswerten des zweiten Messzyklus sowie auf dem aktuellen Geschwindigkeitswert und/oder Abstandswert der Zieldetektion werden nun die Ähnlichkeitsmaße bestimmt, auf deren Basis die Zuordnung einer Detektion zu der Zieldetektion sowie die Validierung der Zieldetektion erfolgt. Durch das Auflösen der Mehrdeutigkeit kann das zumindest eine Zielobjekt besonders zuverlässig validiert werden. Damit kann die Größe des nutzbaren Messbereiches vervielfältigt werden.

Dabei kann vorgesehen sein, dass in Schritt e) die Mehrdeutigkeit beseitigt wird, indem für die zumindest eine Zieldetektion und die Detektionen mögliche Geschwindigkeitswerte und/oder mögliche Abstandswerte bestimmt werden und jeweils einer der möglichen Geschwindigkeitswerte und/oder der möglichen Abstandswerte als der eindeutige Geschwindigkeitswert und/oder der eindeutige Abstandswert bestimmt wird. Dazu können beispielsweise die möglichen, zu der Zieldetektion bestimmten Werte mit den möglichen, zu den Detektionen bestimmten Werte verglichen werden. Wenn einer der möglichen Werte der Zieldetektion mit einem möglichen Wert einer der Detektionen übereinstimmt, wird dieser als der tatsächliche Wert für die Detektion und die Zieldetektion verwendet. Vorzugsweise werden der eindeutige Geschwindigkeitswert und/oder der eindeutige Abstandswert aus den möglichen Geschwindigkeitswerten und/oder Abstandswerten mittels des chinesischen Restsatzes bestimmt. Mit anderen Worten bedeutet dies, dass die Mehrdeutigkeit durch die Anwendung des chinesischen Restsatzes aufgelöst wird. Damit können die eindeutigen Werte besonders schnell und mit einem geringen Rechenaufwand bestimmt werden.

In einer vorteilhaften Ausführungsform werden in Schritt a) zur Vorhersage des aktuellen Abstandswertes und des aktuellen Geschwindigkeitswertes der zumindest einen Zieldetektion Bewegungsgleichungen vorgegeben, wobei der in dem ersten Messzyklus bestimmte Abstandswert und der in dem ersten Messzyklus bestimmte Geschwindigkeitswert als Startwerte für die Bewegungsgleichungen bestimmt werden. Dabei wird beispielsweise eine erste Bewegungsgleichung zur Vorhersage des aktuellen Abstandswertes vorgegeben und eine zweite Bewegungsgleichung zur Vorhersage des aktuellen Geschwindigkeitswertes vorgegeben. Anders ausgedrückt, wird ausgehend von dem in dem ersten Messzyklus bestimmten Abstandswert der Zieldetektion anhand der ersten Bewegungsgleichung der aktuelle Abstandswert bestimmt. Ausgehend von dem in dem ersten Messzyklus bestimmten Geschwindigkeitswert der Zieldetektion wird anhand der zweiten Bewegungsgleichung der aktuelle Geschwindigkeitswert bestimmt. Die Bewegungsgleichungen werden insbesondere in Abhängigkeit von einer Periodendauer der Messzyklen bestimmt. Mittels der Bewegungsgleichungen kann auf besonders einfache Weise geschätzt beziehungsweise vorhergesagt werden, welchen Abstandswert und welchen Geschwindigkeitswert das Zielobjekt nach dem ersten Messzyklus aufweist.

Vorzugsweise wird bei der Vorhersage des aktuellen Abstandswertes und/oder des aktuellen Geschwindigkeitswertes der zumindest einen Zieldetektion ein Azimutwinkel des Zielobjektes in dem Umgebungsbereich bezogen auf die Sensoreinrichtung berücksichtigt. Zur Prognose der aktuellen Abstandwerte und/oder Geschwindigkeitswerte werden Azimutunterschiede beziehungsweise Winkelunterschiede zwischen zwei Messzyklen berücksichtigt. Dadurch wird in vorteilhafter Weise berücksichtigt, dass sich ein Zielobjekt auch tangential und nicht nur radial zum Sensor bewegen kann. Aus der tangentialen Bewegung des Zielobjektes resultiert der Azimutunterschied des zumindest einen Zielobjektes zwischen zwei Messzyklen.

Bevorzugt wird als der aktuelle Geschwindigkeitswert ein Wert für eine Radialgeschwindigkeit des Zielobjektes vorhergesagt, wobei bei der Vorhersage des aktuellen Geschwindigkeitswertes des Zielobjektes eine Tangentialgeschwindigkeit des Zielobjektes berücksichtigt wird. Der Erfindung liegt hierbei die Erkenntnis zugrunde, dass die tangentiale Bewegung, also die tangentiale Geschwindigkeit des Zielobjektes, auch einen Einfluss auf die radiale Geschwindigkeit des Zielobjektes beziehungsweise die relative Geschwindigkeit des Zielobjektes zur Sensoreinrichtung hat. Es wird also auch eine Prognose der Geschwindigkeit unter Zuhilfenahme von Azimutunterschieden durchgeführt. Somit können die aktuellen Werte für die Geschwindigkeit und den Abstand des Zielobjektes besonders genau und zuverlässig bestimmt werden. Es wird in vorteilhafter Weise eine Vielzahl von möglichen Informationen herangezogen, um die Plausibilität der Validierung zu erhöhen.

In einer Weiterbildung der Erfindung wird in Schritt c) eine der Detektionen anhand des Nächste-Nachbarn-Verfahrens beziehungsweise Nearest-Neighbor-Verfahrens der zumindest einen Zieldetektion zugeordnet. Bei dem dem Nächste-Nachbarn-Verfahren erfolgt die Zuordnung einer Detektion zu der zumindest einen Zieldetektion unter Berücksichtigung der nächsten Nachbarn der Zieldetektion. Das Ähnlichkeitsmaß beziehungsweise Abstandsmaß beschreibt dabei den Abstand zwischen dem zumindest einen Zielobjekt und einer Detektion in dem Abstands-Geschwindigkeits-Raum. Es werden also zunächst anhand der Ähnlichkeitsmaße die Detektionen identifiziert, welche der Zieldetektion besonders nahe kommen, also welche Detektionen in dem Abstands-Geschwindigkeits-Raum einen besonders geringen Abstand zu der zumindest einen Zieldetektion aufweisen. Aus diesen nächsten Detektionen wird diejenige Detektion ausgewählt, welche der zumindest einen Zieldetektion am nächsten kommt, also welche in dem Abstands-Geschwindigkeits-Raum den geringsten Abstand zu der zumindest einen Zieldetektion aufweist. Anders ausgedrückt, wird diejenige Kombination aus Zieldetektion und Detektion ausgewählt, deren Abweichung beziehungsweise Fehler am kleinsten ist. Dieses Nächste-Nachbarn-Verfahren kann besonders einfach als ein Algorithmus für die fahrzeugseitige Recheneinrichtung implementiert werden.

Besonders bevorzugt wird als das Ähnlichkeitsmaß jeweils eine Mahalanobis-Distanz zwischen der zumindest einen Zieldetektion aus dem ersten Messzyklus und den Detektionen aus dem zumindest einen zweiten Messzyklus bestimmt. Die Mahalanobis-Distanz ist dabei insbesondere eine Distanz beziehungsweise ein Abstand zwischen der zumindest einen Zieldetektion und einer der Detektionen in dem Abstands-Geschwindigkeits-Raum und beschreibt die Ähnlichkeit zwischen der zumindest einen Zieldetektion und den Detektionen aus dem zweiten Messzyklus. Das Ähnlichkeitsmaß wird also als die Distanz zwischen den aktuellen Werte und den Werten aus dem zweiten Messzyklus in dem Abstands- Geschwindigkeits-Raum angegeben. Mit anderen Worten bedeutet dies, dass Differenzen zwischen den aktuellen und den in dem zweiten Messzyklus bestimmten Abstandswerten und zwischen den aktuellen und den in dem zweiten Messzyklus bestimmten Geschwindigkeitswerten bestimmt werden, welche einen mehrdimensionalen Fehlerraum aufspannen können. Diese Differenzen werden, insbesondere unter Berücksichtigung von Varianzen und Kovarianzen der Werte, auf die Mahalanobis-Distanz projiziert, welche insbesondere eine dimensionslose, skalare und nicht-negative Größe ist. Insbesondere unter der Annahme, dass die Werte normalverteilt sind, ist Punkten in dem Fehlerraum mit gleicher Wahrscheinlichkeit die gleiche Mahalanobis-Distanz zugeordnet.

Wenn als das Ähnlichkeitsmaß die Mahalanobis-Distanz bestimmt wird, so ist der Toleranzbereich insbesondere eine Ellipse in dem Geschwindigkeits-Abstands-Raum. Wenn die Mahalanobis-Distanz zwischen der Zieldetektion und der zugeordneten Detektion innerhalb dieser Ellipse liegt, so gilt die Zieldetektion als validiert. Alternativ dazu kann auch eine euklidische Distanz zwischen der zumindest einen Zieldetektion und den Detektionen aus dem zumindest einen zweiten Messzyklus in dem Abstands-Geschwindigkeits-Raum bestimmt werden. In diesem Fall ist der Toleranzbereich ein Kreis in dem Geschwindigkeits-Abstands-Raum.

In einer vorteilhaften Ausgestaltung der Erfindung wird in dem ersten Messzyklus anhand des Echosignals eine Vielzahl von Zieldetektionen von Zielobjekten sowie zu den Zieldetektionen zugehörige Abstandswerte und Geschwindigkeitswerte bestimmt. In Schritt a) wird zu jeder Zieldetektion ein aktueller Abstandswert und ein aktueller Geschwindigkeitswert vorhergesagt, in Schritt b) jeweils ein Ähnlichkeitsmaß für jede Kombination einer der Zieldetektionen des ersten Messzyklus mit einer der Detektionen des zweiten Messzyklus bestimmt, in Schritt c) jeder Zieldetektion des ersten Messzyklus eine Detektion des zweiten Messzyklus anhand der Ähnlichkeitsmaße zugeordnet und in Schritt d) jede Zieldetektion validiert, falls das bestimmte Ähnlichkeitsmaß zwischen dieser Zieldetektion und der zugeordneten Detektion in dem vorbestimmten Toleranzbereich liegt. Mit anderen Worten bedeutet dies, dass aus dem in dem ersten Messzyklus empfangenen Echosignal diejenigen Echosignalanteile bestimmt werden, welche einer Zieldetektion entsprechen. Zu diesen Zieldetektionen werden jeweils ein Abstandswert und ein Geschwindigkeitswert bestimmt, wobei zuerst Schritt e) zur Beseitigung der Mehrdeutigkeit der Abstandswerte und/oder Geschwindigkeitswerte, beispielsweise mittels des chinesischen Restsatzes, durchgeführt werden kann. In Schritt a) werden für jede Zieldetektion ein aktueller Geschwindigkeitswert und ein aktueller Abstandswert vorhergesagt. Dabei werden in Schritt b) der aktuelle Abstandswert und der aktuelle Geschwindigkeitswert jeder Zieldetektion aus dem ersten Messzyklus mit jedem Abstandswert und Geschwindigkeitswert der Detektionen aus dem zweiten Messzyklus verglichen und ein Ähnlichkeitsmaß bestimmt. In Schritt c) wird jeder Zieldetektion basierend auf dem Ähnlichkeitsmaß diejenige Detektion zugeordnet, welche die wahrscheinlichste ist. Somit kann jedem Element der Range-Doppler-Matrix aus dem ersten Messzyklus eindeutig ein Element der Range-Doppler-Matrix aus dem zweiten Messzyklus zugeordnet In Schritt d) wird für jede Zuordnung überprüft, ob das zugehörige Ähnlichkeitsmaß innerhalb des Toleranzbereiches liegt und falls ja, die entsprechende Zieldetektion validiert.

Die Erfindung betrifft außerdem eine Recheneinrichtung für ein Fahrerassistenzsystem eines Kraftfahrzeugs, welche dazu ausgelegt ist, das erfindungsgemäße Verfahren oder eine Ausführungsform des erfindungsgemäßen Verfahrens durchzuführen. Bei der Recheneinrichtung kann es sich beispielsweise um einen programmierbaren Rechner, wie etwa einen digitalen Signalprozessor, einen Mikrocontroller oder dergleichen handeln. Demgemäß kann ein Computerprogramm vorgesehen sein, das beispielsweise auf einem Speichermedium abgelegt ist, wobei das Programm zum Ausführen des hier beschriebenen Verfahrens programmiert ist, wenn es auf den Rechnern ausgeführt wird. Insbesondere kann das Programm auf der Recheneinrichtung ausgeführt werden. Die Recheneinrichtung kann beispielsweise auch als ein fahrzeugseitiges Steuergerät ausgebildet sein.

Ein erfindungsgemäßes Fahrerassistenzsystem für ein Kraftfahrzeug umfasst eine erfindungsgemäße Recheneinrichtung sowie zumindest eine Sensoreinrichtung. Die zumindest einen Sensoreinrichtung kann einen Ultraschallsensor umfassen. Bevorzugt umfasst die zumindest eine Sensoreinrichtung einen Radarsensor. Das Fahrerassistenzsystem kann beispielsweise eine Einparkhilfe, ein Totwinkelassistent, ein Abstandsregeltempomat oder ein automatischer Türöffner sein.

Ein erfindungsgemäßes Kraftfahrzeug umfasst ein erfindungsgemäßes Fahrerassistenzsystem. Das Kraftfahrzeug ist insbesondere als ein Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Recheneinrichtung, für das erfindungsgemäße Fahrerassistenzsystem sowie für das erfindungsgemäße Kraftfahrzeug.

Mit Angaben "vor", "hinter", "radial", "tangential", etc. sind bei bestimmungsgemäßem Gebrauch und bestimmungsgemäßem Anordnen der Sensoreinrichtung am Kraftfahrzeug und einem dann in eine Fahrzeuglängsrichtung des Kraftfahrzeugs blickenden Beobachter gegebenen Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:

Fig. 1    eine schematische Darstellung einer Ausführungsform eines erfindungsgemäßen Kraftfahrzeugs;

Fig. 2    eine schematische Darstellung eines Ablaufdiagramms einer Ausführungsform des erfindungsgemäßen Verfahrens;

Fig. 3    eine schematische Darstellung zur Veranschaulichung der Mehrdeutigkeit von Geschwindigkeitswerten;

Fig. 4    eine schematische Darstellung zur Veranschaulichung der Aufhebung der Mehrdeutigkeit von Geschwindigkeitswerten;

Fig. 5    eine schematische Darstellung des Ähnlichkeitsmaßen und des Toleranzbereiches in einem Abstands-Geschwindigkeits-Raum;

Fig. 6    eine geometrische Darstellung von Abstands- und Geschwindigkeitsvektoren zur Vorhersage der aktuellen Abstandswerte; und

Fig. 7    eine schematische Darstellung von Abstands- und Geschwindigkeitsvektoren zur Vorhersage der aktuellen Geschwindigkeitswerte.

In den Figuren sind gleiche sowie funktionsgleiche Elemente mit den gleichen Bezugszeichen versehen.

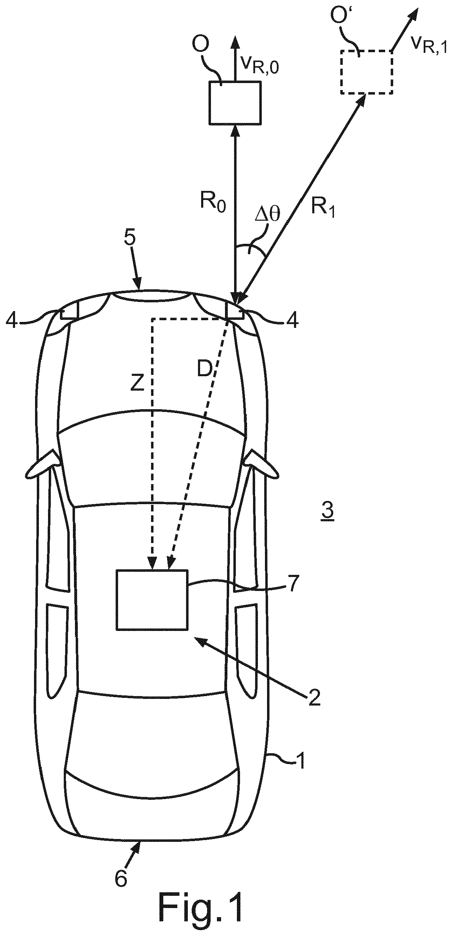

Fig. 1 zeigt ein Kraftfahrzeug 1 gemäß einer Ausführungsform der vorliegenden Erfindung. Das Kraftfahrzeug 1 ist insbesondere als ein Personenkraftwagen ausgebildet. Das Kraftfahrzeug 1 umfasst ein Fahrerassistenzsystem 2, welches beispielsweise als ein Parkhilfesystem, ein Abstandsregeltempomat, ein Totwinkelassistent oder dergleichen ausgebildet sein kann. Das Fahrerassistenzsystem 2 dient dazu, einen Umgebungsbereich 3 des Kraftfahrzeugs 1 zu überwachen. Dazu umfasst das Fahrerassistenzsystem 2 zumindest eine Sensoreinrichtung 4, mittels welcher Objekte in dem Umgebungsbereich 3 des Kraftfahrzeugs 1 erfasst werden können. Die Sensoreinrichtung 4 kann in einem Frontbereich 5 des Kraftfahrzeugs 1 angeordnet sein und den Umgebungsbereich 3 vor dem Kraftfahrzeug 1 überwachen und/oder in einem Heckbereich 6 des Kraftfahrzeugs 1 angeordnet sein und den Umgebungsbereich 3 hinter dem Kraftfahrzeug 1 überwachen. Die Sensoreinrichtungen 4 können beispielsweise einen Radarsensor und/oder einen Ultraschallsensor umfassen. Außerdem umfasst das Fahrerassistenzsystem 2 eine Recheneinrichtung 7, welche beispielsweise durch ein fahrzeugseitiges Steuergerät ausgebildet sein kann.

Hier weisen die Sensoreinrichtungen 4 Radarsensoren auf und sind in dem Frontbereich 5 des Kraftfahrzeugs 1, beispielsweise verdeckt hinter einem Stoßfänger des Kraftfahrzeugs 1, angeordnet. Die Sensoreinrichtungen 4 werden hier in zumindest zwei, insbesondere zeitlich aufeinanderfolgenden, Messzyklen betrieben. In einem ersten Messzyklus sendet die Sensoreinrichtung 4 ein Sendesignal aus, welches an Zielobjekten O, von welchen hier nur ein Zielobjekt O dargestellt ist, in dem Umgebungsbereich 3 reflektiert wird. Das reflektierte Sendesignal gelangt als Echosignal wieder zu der Sensoreinrichtung 4 zurück. Dabei werden, beispielsweise von der Recheneinrichtung 7, Zieldetektionen Z, welche die Zielobjekte O charakterisieren, anhand des von der Sensoreinrichtung erfassten Echosignals bestimmt. Jeder Zieldetektion Z kann ein Abstandswert $R_0$ und ein Geschwindigkeitswert $v_{R,0}$ zugeordnet werden, wobei der Abstandswert $R_0$ einen Abstand zwischen den Zielobjekten O und dem Kraftfahrzeug 1 und der Geschwindigkeitswert $v_{R,0}$ eine Geschwindigkeit der Zielobjekte O, insbesondere eine Radialgeschwindigkeit der Zielobjekte O, charakterisiert. Die Zielobjekte O sollen nun validiert werden. Dies bedeutet, dass verifiziert werden soll, dass die Zieldetektionen Z tatsächlich von Objekten in dem Umgebungsbereich 3 stammen und nicht beispielsweise einem Rauschanteil im Echosignal entsprechen, welcher fälschlicherweise als Zieldetektion erfasst wurde. Dazu sollen die Zielobjekte O in zumindest einem zeitlich auf den ersten Messzyklus folgenden zweiten Messzyklus erneut erfasst werden.

In dem zumindest einen zweiten Messzyklus sendet die Sensoreinrichtung 4 erneut ein Sendesignal aus, welches an Zielobjekten O', von welchen hier lediglich ein Zielobjekt O', dargestellt ist, in dem Umgebungsbereich 3 reflektiert wird. Das hier dargestellt Zielobjekt O' entspricht dem hier dargestellten Zielobjekt O aus dem ersten Messzyklus, welches sich zwischen den zwei Messzyklen bewegt hat. Insbesondere hat sich das Zielobjekt O radial und tangential zum Kraftfahrzeug 1 bewegt. Daher weist das Zielobjekt O' in dem zweiten Messzyklus zu dem Zielobjekt O in dem ersten Messzyklus einen Azimutunterschied $\Delta\ominus$ auf. Anhand des Echosignals aus dem zweiten Messzyklus werden Detektionen D, welche die in dem zweiten Messzyklus erfassten Zielobjekte O' beschreiben, bestimmt. Außerdem wird zu allen Detektionen D jeweils ein Abstandswert $R_1$ und ein Geschwindigkeitswert $v_{R,1}$ bestimmt, wobei der Abstandswert $R_1$ einen Abstand zwischen den Zielobjekten O' und dem Kraftfahrzeug 1 und der Geschwindigkeitswert $v_{R,1}$ eine Geschwindigkeit der Zielobjekte O', insbesondere eine Radialgeschwindigkeit der Zielobjekte O', charakterisiert. Vor dem Validieren der in dem ersten Messzyklus erfassten Zieldetektionen Z muss nun zunächst jeder Zieldetektion Z aus dem ersten Messzyklus diejenige Detektion D aus dem zweiten Messzyklus zugeordnet werden, welche dasselbe Zielobjekt O charakterisiert.

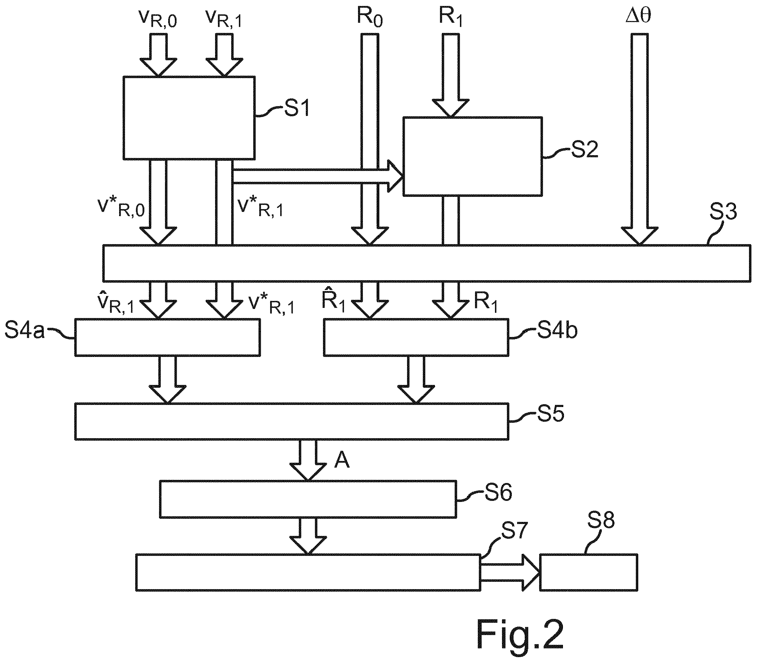

Ein Ablaufdiagramm einer Ausführungsform eines erfindungsgemäßen Verfahrens zum Validieren der Zieldetektionen Z ist in Fig. 2 gezeigt. In einem Schritt S1 wird zunächst eine Mehrdeutigkeit der Abstandswerte $R_0$ der

Zieldetektionen Z und der Abstandswerte $R_1$ der Detektionen D und und/oder der Geschwindigkeitswerte $v_{R,0}$ der Zieldetektionen Z und der Geschwindigkeitswerte $v_{R,1}$ der Detektionen D beseitigt. Eine Mehrdeutigkeit von Abstandswerten $R_0$, $R_1$ und/oder Geschwindigkeitswerten $v_{R,0}$, $v_{R,1}$ tritt insbesondere bei Radarsensoren auf, wobei es vorkommen kann, dass der Radarsensor keine eindeutige Geschwindigkeitsmessung und/oder keine eindeutige Abstandsmessung erlaubt. Die Eindeutigkeit der Messung ist bei Radarsensoren insbesondere durch die sogenannte Pulsfolgefrequenz PRF bestimmt.

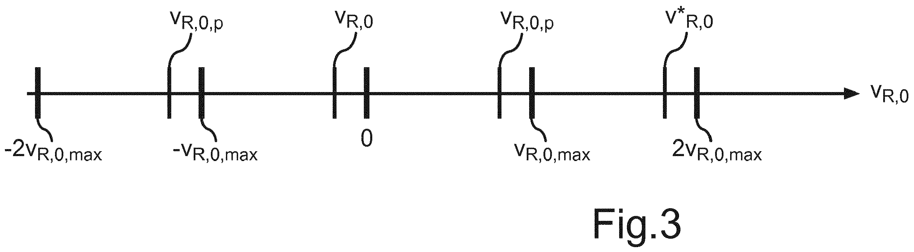

Wenn die Sensoreinrichtung 4 beispielsweise als ein Pulse-Doppler-Radar ausgebildet ist, kann es vorkommen, dass die Sensoreinrichtung 4 keine eindeutige Geschwindigkeitsmessung erlaubt. Die Geschwindigkeitsmehrdeutigkeit der Geschwindigkeit $v_{R,0}$ des Zielobjektes O ist in Fig. 3 veranschaulicht. Die Pulsfolgefrequenz PRF des Pulse-Doppler-Radars bestimmt dabei eine maximale Geschwindigkeit $v_{R,0,max}$ des Zielobjektes O, welche von der Sensoreinrichtung 4 verwechslungsfrei detektiert werden kann. Diese maximale Geschwindigkeit $v_{R,0,max}$ wird auch als "maximum unambiguous velocity" bezeichnet und wird nach der Formel

$$v_{R,0,\max} = \frac{\lambda \cdot PRF}{4}$$

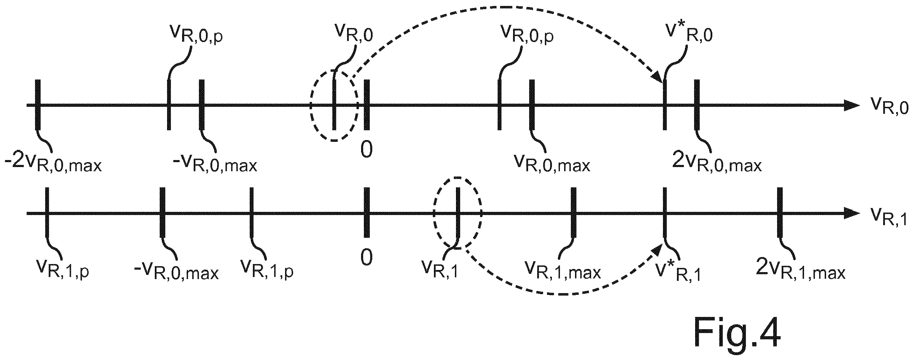

bestimmt, wobei $\lambda$ die Wellenlänge des Sendesignals ist. Werte für die maximale Geschwindigkeit $v_{R,0,max}$ sind hier auf einer Geschwindigkeitsachse, $v_{R,0}$-Achse, dargestellt. Außerdem sind der von der Sensoreinrichtung 4 gemessene Geschwindigkeitswert $v_{R,0}$ sowie weitere, aufgrund der Geschwindigkeitsmehrdeutigkeit mögliche Geschwindigkeitswerte $v_{R,0,p}$, $v^*_{R,0}$ dargestellt, wobei nur der Geschwindigkeitswert $v^*_{R,0}$ dem tatsächlichen Geschwindigkeitswert des Zielobjektes O entspricht. Um diese Mehrdeutigkeit zu beseitigen, können beispielsweise, wie in Fig. 4 gezeigt, die Geschwindigkeitswerte $v_{R,0}$, $v^*_{R,0}$, $v_{R,0,p}$ der Zieldetektion Z aus dem ersten Messzyklus mit Geschwindigkeitswerten $v_{R,1}$, $v^*_{R,1}$, $v_{R,1,p}$ der Detektion D aus dem zweiten Messzyklus, insbesondere mit allen Detektionen D aus dem zweiten Messzyklus, verglichen werden. Dabei beschreibt der Geschwindigkeitswert $v_{R,1}$ die von der Sensoreinrichtung 4 gemessene Geschwindigkeit des Zielobjektes O', die Geschwindigkeitswerte $v_{R,1,p}$ die möglichen Geschwindigkeiten des Zielobjektes O' und der Geschwindigkeitswert $v^*_{R,1}$ die tatsächliche Geschwindigkeit des Zielobjektes O'. Die in den beiden Messzyklen erfassten Geschwindigkeitswerte $v^*_{R,0}$, $v^*_{R,1}$ mit in etwa dem gleichen Wert werden als die tatsächlichen eindeutigen Geschwindigkeitswerte $v^*_{R,0}$, $v^*_{R,1}$ identifiziert. Eine alternative Möglichkeit zur Aufhebung der Geschwindigkeitsmehrdeutigkeit und zur Bestimmung der eindeutigen Geschwindigkeitswerte $v^*_{R,0}$, $v^*_R$ ist die Anwendung der chinesischen Restsatzes. Die Anwendung des chinesischen Restsatzes erlaubt eine besonders schnelle Möglichkeit zur Aufhebung der Geschwindigkeitsmehrdeutigkeit, welche hinsichtlich des Rechenaufwands für die Recheinrichtung 7 optimiert ist.

Wieder Bezug nehmend auf Fig. 2 werden in einem zweiten Schritt S2 unter Berücksichtigung der Bewegung der Zielobjekte O, O' die zu den Detektionen D bestimmten Geschwindigkeitswerte $v_{R,1}$ und die zu den Detektionen D bestimmten Abstandswerte $R_1$ entkoppelt. In einem Schritt S3 werden unter Berücksichtigung der Abstandswerte $R_1$ und der Geschwindigkeitswerte $v_{R,1}$ aus dem ersten Messzyklus, insbesondere unter Berücksichtigung des Azimutunterschiedes $\Delta\theta$, aktuelle Geschwindigkeitswerte $\hat{v}_{R,1}$ und aktuelle Abstandswerte $\hat{R}_1$ für die Zieldetektionen Z vorhergesagt. Die vorhergesagten Werte $\hat{v}_{R,1}$, $\hat{R}_1$ entsprechen Werten, welche das Zielobjekt O' in dem zweiten Messzyklus aufweisen soll.

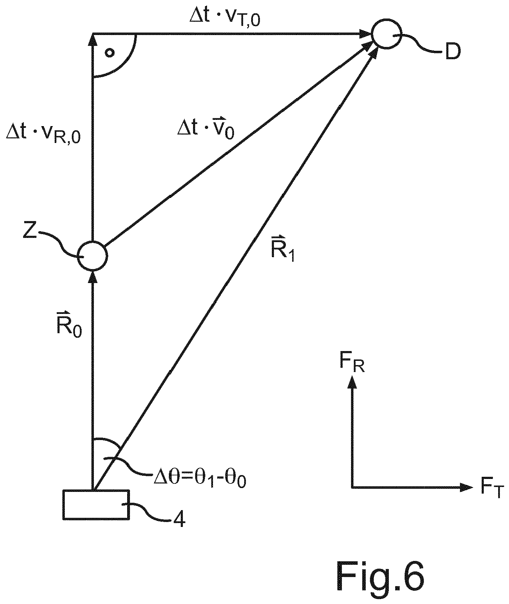

Dazu werden Bewegungsgleichungen für das Zielobjekt O vorgegeben. Die Bewegungsgleichung zur Bestimmung eines aktuellen Abstandswertes $\hat{R}_1$ ergibt sich aus dem Zusammenhang zwischen dem Abstandsvektor $\vec{R}_o$ und dem Geschwindigkeitsvektor $\vec{v}_0$ des Zielobjektes O in dem ersten Messzyklus und dem Abstandsvektor $\vec{R}_1$ des Zielobjektes O' in dem zweiten Messzyklus, welcher in Fig. 6 dargestellt ist.

Der Abstandsvektor $\vec{R}_1$ des Zielobjektes O' in dem zweiten Messzyklus ergibt sich aus dem Abstandsvektor

$$\vec{R}_o = \begin{pmatrix} R_0 \\ 0 \end{pmatrix}$$ und dem Geschwindigkeitsvektor $$\vec{v}_0 = \begin{pmatrix} v_{R,0} \\ v_{T,0} \end{pmatrix}$$ des Zielobjektes O in dem ersten Messzyklus über die Formel

$$\vec{R}_1 = \vec{R}_0 + \Delta t \vec{v}_0 = \begin{pmatrix} R_0 + \Delta t v_{R,0} \\ \Delta t v_{T,0} \end{pmatrix}$$

$\Delta t$ entspricht einer Messzyklusperiode und $v_{R,0}$ der Radialgeschwindigkeit des Zielobjektes O, also der Komponente

des Geschwindigkeitsvektors $\vec{v}_0$ in radialer Richtung $F_R$, in dem ersten Messzyklus. Die Tangentialgeschwindigkeit $v_{T,0}$ des Zielobjektes O, also die Komponente des Geschwindigkeitsvektors $\vec{v}_0$ in tangentialer Richtung $F_T$, in dem ersten Messzyklus kann über die Formel

$$v_{T,0} = \frac{1}{\Delta t} \cdot \tan(\Delta\theta) \cdot \left( R_0 \cdot \Delta t \cdot v_{R,0} \right)$$

bestimmt werden. Der Azimutunterschied $\Delta\theta = \theta_1 - \theta_0$ ergibt sich aus der Differenz des Azimutwinkels $\theta_1$ des Zielobjektes O in dem ersten Messzyklus und des Azimutwinkels $\theta_2$ des Zielobjektes O' in dem zweiten Messzyklus. Die Länge des Abstandsvektors $\vec{R}_1$ ergibt den Abstandswert $\vec{R}_1$ des zweiten Messzyklus:

$$R_1 = \left\| \vec{R}_1 \right\| = \frac{R_0 + \Delta t \cdot v_{R,0}}{\cos\Delta\theta}$$

Der vorhergesagte Abstandswert $\hat{R}_1$ ergibt sich also aus dem Abstandswert $R_0$ und dem Geschwindigkeitswert $v_{R,0}$ des Zielobjektes O aus dem ersten Messzyklus über die Formel

$$\hat{R}_1 = \frac{R_0 + \Delta t \cdot v_{R,0}}{\cos\Delta\theta}$$

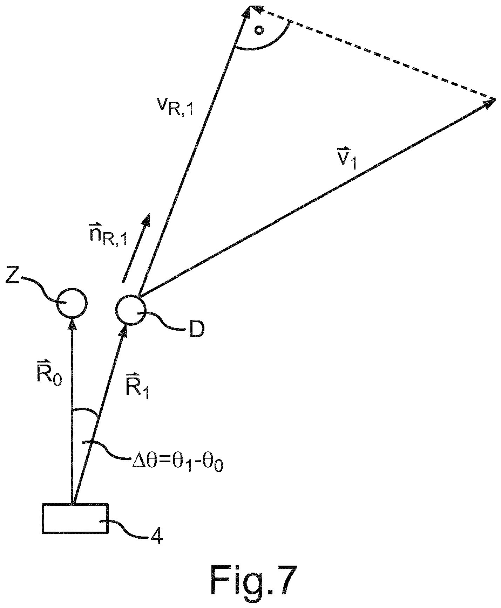

Die Bewegungsgleichung zur Bestimmung des aktuellen Geschwindigkeitswertes $\hat{v}_{R,1}$ ergibt sich aus dem Zusammenhang zwischen dem Abstandsvektor $\vec{R_o}$ des Zielobjektes O in dem ersten Messzyklus und dem Abstandsvektor $\vec{R}_1$ und dem Geschwindigkeitsvektor $\vec{v}_1$ des Zielobjektes O' in dem zweiten Messzyklus, welcher in Fig. 7 dargstellt ist. Der Geschwindigkeitsvektor $\vec{v}_1$ kann über die Formel

$$\vec{v}_1 = \vec{v}_0 = \begin{pmatrix} v_{R,0} \\ v_{T,0} \end{pmatrix}$$

angegeben werden.

Die radiale Geschwindigkeitskomponente $v_{R,1}$ ergibt sich durch die Projektion des Geschwindigkeitsvektors $\vec{v}_1$ auf den Einheitsvektor $\vec{n}_{R,1}$:

$$v_{R,1} = \vec{v} \cdot \vec{n}_{R,1}.$$

Die Länge des Einheitsvektors ist über $\left\| \vec{n}_{R,1} \right\| = 1$ gegeben. Der Einheitsvektor kann angegeben werden als

$$\vec{n}_{R,1} = \frac{\vec{R}_1}{\left\| \vec{R}_1 \right\|} = \begin{pmatrix} \cos\Delta\theta \\ \sin\Delta\theta \end{pmatrix}$$

Daraus lässt sich der radiale Geschwindigkeitswert $v_{R,1}$ wie folgt berechnen:

$$v_{R,1} = \vec{v}_1 \cdot \frac{\vec{R}_1}{\|\vec{R}_1\|} = \begin{pmatrix} v_{R,0} \\ v_{T,0} \end{pmatrix} \cdot \begin{pmatrix} \cos \Delta\theta \\ \sin \Delta\theta \end{pmatrix} = \begin{pmatrix} v_{R,0} \\ \frac{1}{\Delta t} \cdot \tan(\Delta\theta) \cdot (R_0 + \Delta t \cdot v_{R,0}) v_{R,0} \end{pmatrix} \cdot \begin{pmatrix} \cos \Delta\theta \\ \sin \Delta\theta \end{pmatrix} =$$

$$\frac{v_{R,0} + \sin^2(\Delta\theta) \cdot \frac{R_0}{\Delta t}}{\cos \Delta\theta} = \frac{v_{R,0} + [1 - \cos^2(\Delta\theta)] \cdot \frac{R_0}{\Delta t}}{\cos \Delta\theta}.$$

Zur Vereinfachung der Bestimmung der radialen Geschwindigkeit $v_{R,1}$ für die Recheneinrichtung 7 werden die quadratischen Terme vermieden und die radiale Geschwindigkeit $v_{R,1}$ über die Formel

$$v_{R,1} = \frac{v_{R,0} + \frac{R_0}{\Delta t}}{\cos \Delta\theta} - \frac{R_0}{\Delta t} \cos \Delta\theta$$

bestimmt.

Der aktuelle Geschwindigkeitswert $\hat{v}_{R,1}$ kann also aus den Werten $R_0$, $v_{R,0}$ des ersten Messzyklus mit folgender Formel vorhergesagt beziehungsweise bestimmt werden:

$$\hat{v}_{R,1} = \frac{v_{R,0} + \frac{R_0}{\Delta t}}{\cos \Delta\theta} - \frac{R_0}{\Delta t} \cos \Delta\theta$$

In einem Schritt S4a (siehe Fig. 2) wird eine Fehlermatrix auf Basis der vorhergesagten Geschwindigkeitswerte $\hat{v}_{R,1}$ und der in dem zweiten Messzyklus bestimmten Geschwindigkeitswerte $v_{R,1}$ beziehungsweise den tatsächlichen Geschwindigkeitswerten $v^*_{R,1}$ bestimmt. Die in Schritt S4a bestimmte Fehlermatrix beschreibt die Abweichungen zwischen den vorhergesagten Geschwindigkeitswerten $\hat{v}_{R,1}$ und den in dem zweiten Messzyklus bestimmten Geschwindigkeitswerten $v_{R,1}$ beziehungsweise den tatsächlichen Geschwindigkeitswerten $v^*_{R,1}$. In einem Schritt S4b wird eine Fehlermatrix basierend auf den aktuellen vorhergesagten Abstandswerten $\hat{R}_1$ und den in dem zweiten Messzyklus bestimmten Abstandswerten $R_1$ beziehungsweise den tatsächlichen Abstandswerten $R^*_1$ bestimmt. Die in Schritt S4b bestimmte Fehlermatrix beschreibt die Abweichungen zwischen den vorhergesagten Abstandswerten $\hat{R}_1$ und den in dem zweiten Messzyklus bestimmten Abstandswerten $R_1$ beziehungsweise den tatsächlichen Abstandswerten $R^*_1$.

Aus diesen Fehlermatrizen wird in einem Schritt S5 für jede Kombination aus aktuellen Werten $\hat{R}_1$, $\hat{v}_{R,1}$ und in dem zweiten Messzyklus bestimmten Werten $R_1$, $R^*_1$ beziehungsweise tatsächlichen Werten $R^*_1$, $v^*_{R,1}$ jeweils ein Ähnlichkeitsmaß A bestimmt. Das Ähnlichkeitsmaß A kann beispielsweise eine Mahalanobis-Distanz M sein, welche mittels der Formel

$$M^2 = \frac{(\hat{R}_1 - R_1)^2}{2 \cdot \sigma_R^2} + \frac{(\hat{v}_1 - v_1)^2}{\sigma_{v,0}^2 + \sigma_{v,1}^2}$$

berechnet werden kann, wobei $\sigma_R$ die Varianz für die Abstandswerte und $\sigma_{v,0}$ $\sigma_{v,1}$ die Varianzen für die Geschwindigkeitswerte beschreiben. Die Mahalanobis-Distanz M ist also eine Distanz in einem Abstands-Geschwindigkeits-Raum.

Alternativ kann das Ähnlichkeitsmaß A auch eine euklidische Distanz bestimmt werden. In einem Schritt S6 wird jeder Zieldetektion Z anhand der Ähnlichkeitsmaße A diejenige Detektion D zugeordnet, welche der Zieldetektion Z am ähnlichsten ist, also welche den geringsten Fehler aufweist. Dies ist diejenige Detektion D, welche in dem Abstands-Geschwindigkeits-Raum den geringsten Abstand, insbesondere die geringste Mahalanobis-Distanz M, aufweist.

In einem Schritt S7 wird bestimmt, ob das Ähnlichkeitsmaß A zwischen der Zieldetektion Z und der zugeordneten Detektion D innerhalb eines vorbestimmten Toleranzbereiches 8 liegz. Falls das Ähnlichkeitsmaß A innerhalb des Toleranzbereiches 8 liegt, wird in einem Schritt S8 die Zieldetektion Z validiert.

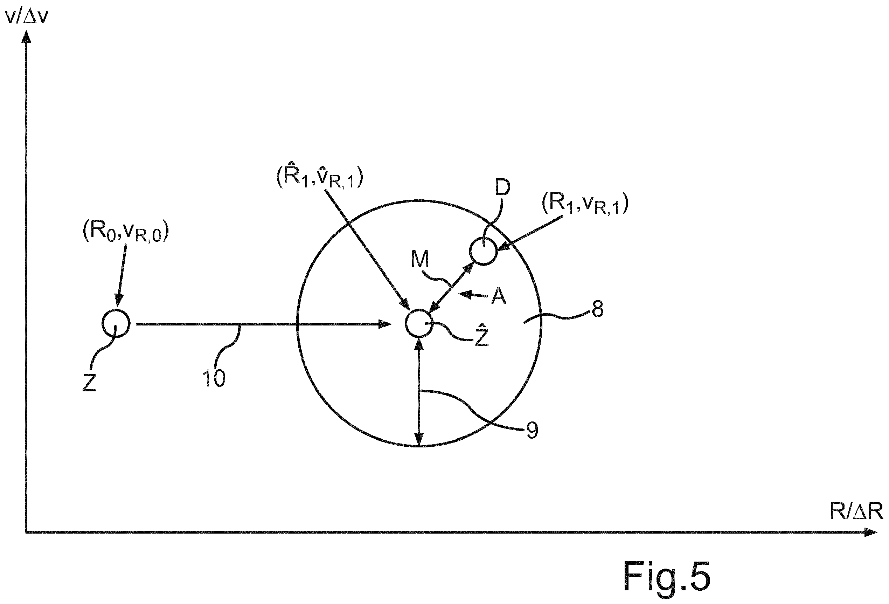

In Fig. 5 ist der Toleranzbereich 8 in einem Geschwindigkeits-Abstands-Raum, v/Δv-R/ΔR-Raum, gezeigt. Der

Abstandswert $R_0$ und der Geschwindigkeitswert $v_{R,0}$ der Zieldetektion Z sind ebenfalls in den Geschwindigkeits-Abstands-Raum eingetragen. Die Zieldetektion Z ist also ein Punkt in dem Geschwindigkeits-Abstands-Raum. Der eingezeichnete Pfeil 10 beschreibt eine Projektion der Zieldetektion Z auf eine vorhergesagte Zieldetektion Z und visualisiert damit die in Schritt S3 beschriebene Vorhersage der aktuellen Werte $\hat{R}_1$, $\hat{v}_{R,1}$. Die vorhergesagte Zieldetektion Z ist ebenfalls ein Punkt in dem Geschwindigkeits-Abstands-Raum. Außerdem ist die in Schritt S6 zugeordnete Detektion D ebenfalls als ein Punkt in dem Abstands-Geschwindigkeits-Raum dargestellt.

Ein Abstand, welcher hier in Form von der Mahalanobis-Distanz M angegeben ist, zwischen der Detektion D und der vorhergesagten Zieldetektion Z in dem Geschwindigkeits-Abstands-Raum entspricht dem Ähnlichkeitsmaß A. Hier befindet sich das Ähnlichkeitsmaß A innerhalb des Toleranzbereiches 8, welcher einen Radius 9 aufweist. Der Radius 9 kann auch als "Gate" bezeichnet werden, wobei über die Wahl des Radius 9 und damit über die Größe des Toleranzbereiches 8 die Validierungswahrscheinlichkeit eingestellt werden kann. Die Werte $R_0$, $R_1$, $v_{R,0}$, $v_{R,1}$ der validierten Zieldetektion Z können beispielsweise dem Fahrerassistenzsystem 2 bereitgestellt werden.

**Patentansprüche**

1. Verfahren zum Validieren von zumindest einer Zieldetektion (Z) zumindest eines Zielobjektes (O) in einem Umgebungsbereich (3) eines Kraftfahrzeugs (1), welche anhand eines, von einer fahrzeugseitigen Sensoreinrichtung (4) in einem ersten Messzyklus erfassten Echosignals bestimmt wird, wobei bei dem Verfahren zu der zumindest einen Zieldetektion (Z) und zu Detektionen (D), welche anhand eines, von der Sensoreinrichtung (4) in zumindest einem zweiten Messzyklus erfassten Echosignals bestimmt werden, jeweils ein Abstandswert ($R_0$, $R_1$) und ein Geschwindigkeitswert ($v_{R,0}$, $v_{R,1}$) bestimmt werden, **gekennzeichnet durch** die Schritte:

   a) Vorhersagen (S3) eines aktuellen Abstandswertes ($\hat{R}_1$) und eines aktuellen Geschwindigkeitswertes ($\hat{v}_{R,1}$) der zumindest einen Zieldetektion (Z) basierend auf dem in dem ersten Messzyklus bestimmten Abstandswert ($R_0$) und Geschwindigkeitswert ($v_{R,0}$);

   b) Bestimmen (S5) jeweils eines Ähnlichkeitsmaßes (A) zwischen der zumindest einen Zieldetektion (Z) des ersten Messzyklus und den Detektionen (D) des zweiten Messzyklus basierend auf dem vorhergesagten aktuellen Abstandswert ($\hat{R}_1$), dem vorhergesagten aktuellen Geschwindigkeitswert ($\hat{v}_{R,1}$), den in dem zweiten Messzyklus bestimmten Abstandswerten ($R_1$) und den in dem zweiten Messzyklus bestimmten Geschwindigkeitswerten ($v_{R,1}$);

   c) Zuordnen (S6) einer der Detektionen (D) des zweiten Messzyklus zu der zumindest einen Zieldetektion (Z) des ersten Messzyklus anhand der bestimmten Ähnlichkeitsmaße (A);

   d) Validieren (S7, S8) der zumindest einen Zieldetektion (Z), falls das jeweilige Ähnlichkeitsmaß (A) zwischen der Zieldetektion (Z) und der zugeordneten Detektion (D) in einem vorbestimmten Toleranzbereich (8) liegt.

2. Verfahren nach Anspruch 1,
   **dadurch gekennzeichnet, dass**
   vor Schritt a) ein Schritt e) durchgeführt wird, bei welchem eine Mehrdeutigkeit der in den zumindest zwei Messzyklen bestimmten Geschwindigkeitswerte ($v_{R,0}$, $v_{R,1}$) und/oder Abstandswerte ($R_0$, $R_1$) beseitigt wird (S1), indem für die Geschwindigkeitswerte ($v_{R,0}$, $v_{R,1}$) und/oder Abstandswerte ($R_0$, $R_1$) jeweils ein eindeutiger Geschwindigkeitswert ($v^*_{R,0}$, $v^*_{R,1}$) und/oder Abstandswert bestimmt wird, wobei für die Schritte a) bis d) anstelle der in den zumindest zwei Messzyklen bestimmten Geschwindigkeitswerte ($v_{R,0}$, $v_{R,1}$) und/oder Abstandswerte ($R_0$, $R_1$) die eindeutigen Geschwindigkeitswerte ($v^*_{R,0}$, $v^*_{R,1}$) und/oder Abstandswerte verwendet werden.

3. Verfahren nach Anspruch 2,
   **dadurch gekennzeichnet, dass**
   in Schritt e) die Mehrdeutigkeit beseitigt wird, indem für die zumindest eine Zieldetektion (Z) und die Detektionen (D) mögliche Geschwindigkeitswerte ($v_{R,0,p}$, $v_{R,1,p}$) und/oder mögliche Abstandswerte bestimmt werden und jeweils einer der möglichen Geschwindigkeitswerte ($v_{R,0,p}$, $v_{R,1,p}$) und/oder der möglichen Abstandswerte als der eindeutige Geschwindigkeitswert ($v^*_{R,0}$, $v^*_{R,1}$) und/oder der eindeutige Abstandswert bestimmt wird.

4. Verfahren nach Anspruch 3,
   **dadurch gekennzeichnet, dass**
   der eindeutige Geschwindigkeitswert ($v^*_{R,0}$, $v^*_{R,1}$) und/oder der eindeutige Abstandswert aus den möglichen Geschwindigkeitswerten ($v_{R,0,p}$, $v_{R,1,p}$) und/oder möglichen Abstandswerten mittels des chinesischen Restsatzes bestimmt wird.

5. Verfahren nach einem der vorhergehenden Ansprüche
**dadurch gekennzeichnet, dass**
in Schritt a) zur Vorhersage des aktuellen Abstandswertes ($\hat{R}_1$) und des aktuellen Geschwindigkeitswertes ($\hat{v}_{R,1}$) der zumindest einen Zieldetektion (Z) Bewegungsgleichungen vorgegeben werden, wobei der im ersten Messzyklus bestimmte Abstandswert ($R_0$) und der im ersten Messzyklus bestimmte Geschwindigkeitswert ($v_{R,0}$) als Startwerte für die Bewegungsgleichungen bestimmt werden.

6. Verfahren nach einem der vorhergehenden Ansprüche,
**dadurch gekennzeichnet, dass**
bei der Vorhersage des aktuellen Abstandswertes ($\hat{R}_1$) und/oder des aktuellen Geschwindigkeitswerts ($\hat{v}_{R,1}$) der zumindest einen Zieldetektion (Z) ein Azimutwinkel ($\Delta\theta$) des Zielobjektes (O) in dem Umgebungsbereich (3) bezogen auf die Sensoreinrichtung (4) berücksichtigt wird.

7. Verfahren nach einem der vorhergehenden Ansprüche,
**dadurch gekennzeichnet, dass**
als der aktuelle Geschwindigkeitswert ($\hat{v}_{R,1}$) ein Wert für eine Radialgeschwindigkeit des Zielobjektes (O) vorhergesagt wird, wobei bei der Vorhersage des aktuellen Geschwindigkeitswertes ($\hat{v}_{R,1}$) des Zielobjektes (O) eine Tangentialgeschwindigkeit ($v_{T,0}$) des Zielobjektes (O) berücksichtigt wird.

8. Verfahren nach einem der vorhergehenden Ansprüche,
**dadurch gekennzeichnet, dass**
in Schritt c) eine der Detektionen (D) anhand des Nächste-Nachbarn-Verfahrens der zumindest einen Zieldetektion (Z) zugeordnet wird.

9. Verfahren nach einem der vorhergehenden Ansprüche,
**dadurch gekennzeichnet, dass**
als die Ähnlichkeitsmaße (A) jeweils eine Mahalanobis-Distanz (M) zwischen der zumindest einen Zieldetektion (Z) aus dem ersten Messzyklus und den Detektionen (D) aus dem zumindest einen zweiten Messzyklus bestimmt werden.

10. Verfahren nach einem der vorhergehenden Ansprüche,
**dadurch gekennzeichnet, dass**
in dem ersten Messzyklus anhand des Echosignals eine Vielzahl von Zieldetektionen (Z) von Zielobjekten (O) sowie zu den Zieldetektionen (Z) zugehörige Abstandswerte ($R_0$) und Geschwindigkeitswerte ($v_{R,0}$) bestimmt werden, in Schritt a) zu jeder Zieldetektion (Z) ein aktueller Abstandswert ($\hat{R}_1$) und ein aktueller Geschwindigkeitswert ($\hat{v}_{R,1}$) vorhergesagt werden, in Schritt b) jeweils ein Ähnlichkeitsmaß (A) für jede Kombination einer der Zieldetektionen (Z) des ersten Messzyklus mit einer der Detektionen (D) des zweiten Messzyklus bestimmt wird, in Schritt c) jeder Zieldetektion (Z) des ersten Messzyklus eine Detektion (D) des zweiten Messzyklus anhand der Ähnlichkeitsmaße (A) zugeordnet wird und in Schritt d) jede Zieldetektion (Z) validiert wird, falls das bestimmte Ähnlichkeitsmaß (A) zwischen dieser Zieldetektion (Z) und der zugeordneten Detektion (D) in dem vorbestimmten Toleranzbereich (8) liegt.

11. Recheneinrichtung (7) für ein Fahrerassistenzsystem (2) eines Kraftfahrzeugs (1), welche dazu ausgelegt ist, ein Verfahren nach einem der vorhergehenden Ansprüche durchzuführen.

12. Fahrerassistenzsystem (2) für ein Kraftfahrzeug (1) mit einer Recheneinrichtung (7) nach Anspruch 11 und zumindest einer Sensoreinrichtung (4).

13. Fahrerassistenzsystem (2) nach Anspruch 12,
**dadurch gekennzeichnet, dass**
die zumindest eine Sensoreinrichtung (4) einen Radarsensor und/oder einen Ultraschallsensor umfasst.

14. Kraftfahrzeug (1) mit einem Fahrerassistenzsystem (2) nach Anspruch 12 oder 13.

Fig.1

Fig.2

$v_{R,0,p}$  $v_{R,0}$  $v_{R,0,p}$  $v^*_{R,0}$

$v_{R,0}$

$-2v_{R,0,max}$  $-v_{R,0,max}$  0  $v_{R,0,max}$  $2v_{R,0,max}$

## Fig.3

EP 3 168 639 A1

Fig.4

Fig.5

$\Delta t \cdot v_{T,0}$

$\Delta t \cdot v_{R,0}$

$\Delta t \cdot \vec{v}_0$

D

Z

$\vec{R}_1$

$\vec{R}_0$

$\Delta \theta = \theta_1 - \theta_0$

4

$F_R$

$F_T$

# Fig.6

Fig.7

**Europäisches Patentamt**
**European Patent Office**
**Office européen des brevets**

# EUROPÄISCHER RECHERCHENBERICHT

Nummer der Anmeldung

EP 16 19 8235

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | DE 10 2015 101049 A1 (FUJITSU TEN LTD [JP]) 20. August 2015 (2015-08-20)<br>* Absätze [0006] - [0010], [0044] - [0052], [0068] - [0077], [0084], [0112], [0118]; Abbildungen 1-9 *<br>----- | 1-14<br><br>4 | INV.<br>G01S13/72<br>G01S13/93<br>G01S13/52<br>G01S13/58 |
| X<br>Y | DE 10 2005 029833 A1 (BOSCH GMBH ROBERT [DE]) 4. Januar 2007 (2007-01-04)<br>* Absätze [0001], [0006], [0026] - [0029]; Abbildungen 1, 5 *<br>----- | 1,5-7,<br>10-14<br>2-4,8,9 | ADD.<br>G01S15/93<br>G01S15/66 |
| X<br>Y | DE 10 2006 049626 A1 (VOLKSWAGEN AG [DE]) 24. April 2008 (2008-04-24)<br>* Absätze [0016], [0023] - [0027]; Abbildung 1 *<br>----- | 1,5-14<br><br>2-4 | |
| Y | MATTHIAS KRONAUGE ET AL: "Radar target detection and Doppler ambiguity resolution",<br>RADAR SYMPOSIUM (IRS), 2010 11TH INTERNATIONAL, IEEE, PISCATAWAY, NJ, USA, 16. Juni 2010 (2010-06-16), Seiten 1-4, XP031731738,<br>ISBN: 978-1-4244-5613-0<br>* Zusammenfassung *<br>----- | 2-4 | |
| Y | WO 97/42520 A1 (ANDREWS GREALIE A JR [US]) 13. November 1997 (1997-11-13)<br>* Seite 4, letzter Absatz - Seite 5, Absatz 1 *<br>----- | 2-4 | |
| Y | JP 2005 331248 A (NEC CORP) 2. Dezember 2005 (2005-12-02)<br>* Absatz [0032] *<br>----- | 8,9 | |

**RECHERCHIERTE SACHGEBIETE (IPC)**

G01S

-/--

Der vorliegende Recherchenbericht wurde für alle Patentansprüche erstellt

| Recherchenort | Abschlußdatum der Recherche | Prüfer |
|---|---|---|
| München | 3. März 2017 | Schmelz, Christian |

EPO FORM 1503 03.82 (P04C03)

**Europäisches Patentamt**
**European Patent Office**
**Office européen des brevets**

# EUROPÄISCHER RECHERCHENBERICHT

Nummer der Anmeldung

EP 16 19 8235

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2013 203165 A1 (GM GLOBAL TECH OPERATIONS INC [US]) 12. September 2013 (2013-09-12) * Absätze [0017] - [0019]; Abbildung 1 * ----- | 8 | |
| Y,D | WO 2011/031358 A2 (RAYTHEON CO [US]; BRAUER TIMOTHY G [US]; PRUSZYNSKI CHARLES J [US]; SV) 17. März 2011 (2011-03-17) * Seite 8, Zeilen 23-31 * ----- | 9 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 3. März 2017 | Schmelz, Christian |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

&.......................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 16 19 8235

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-03-2017

| Im Recherchenbericht angeführtes Patentdokument | Datum der Veröffentlichung | Mitglied(er) der Patentfamilie | Datum der Veröffentlichung |
|---|---|---|---|
| DE 102015101049 A1 | 20-08-2015 | DE 102015101049 A1<br>JP 2015155807 A<br>US 2015234041 A1 | 20-08-2015<br>27-08-2015<br>20-08-2015 |
| DE 102005029833 A1 | 04-01-2007 | DE 102005029833 A1<br>EP 1742085 A1 | 04-01-2007<br>10-01-2007 |
| DE 102006049626 A1 | 24-04-2008 | KEINE | |
| WO 9742520 A1 | 13-11-1997 | AU 712338 B2<br>CA 2253235 A1<br>EP 0897544 A1<br>JP 2000509811 A<br>NO 985154 A<br>WO 9742520 A1 | 04-11-1999<br>13-11-1997<br>24-02-1999<br>02-08-2000<br>23-12-1998<br>13-11-1997 |
| JP 2005331248 A | 02-12-2005 | KEINE | |
| DE 102013203165 A1 | 12-09-2013 | CN 103308058 A<br>DE 102013203165 A1<br>US 2013236047 A1 | 18-09-2013<br>12-09-2013<br>12-09-2013 |
| WO 2011031358 A2 | 17-03-2011 | US 2010318322 A1<br>WO 2011031358 A2 | 16-12-2010<br>17-03-2011 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

**In der Beschreibung aufgeführte Patentdokumente**

- WO 2011031358 A1